# EUROPÄISCHE PATENTANMELDUNG

(11) **EP 0 623 782 A2**
(43) Veröffentlichungstag der Anmeldung: **09.11.1994**
(21) Anmeldenummer: 94103356.5
(22) Anmeldetag: 05.03.1994
(51) Int. Cl.: F21V 7/22

(54) **Reflektor für Fahrzeugscheinwerfer und Verfahren zu dessen Herstellung**

(30) Priorität: 08.04.1993 DE 4311667
(71) Anmelder: ROBERT BOSCH GMBH, 70442 Stuttgart (DE)
(72) Erfinder: Koch, Ekkehard, Dr. Dr. Dipl.-Chem., D-70563 Stuttgart (DE); Gugl, Albin, D-72555 Metzingen (DE); Baumann, Paul, D-72770 Reutlingen (DE); Rief, Bernhard, Dr.-Ing., D-72770 Reutlingen (DE); Frankenhauser, Bruno, Dr. Dr.-Ing., D-73033 Göppingen (DE); Keck, Thomas, Dipl.-Ing. (FH), D-72793 Pfullingen (DE); Rieger, Harry, Dipl.-Ing. (FH), D-72762 Reutlingen (DE)

(57) **Zusammenfassung**

Der Reflektor (10) besteht aus einem Körper (12), der durch Spritzgießen hergestellt ist, anschließend elektrostatisch mit einer Beschichtung (14) versehen ist, auf welcher wiederum eine Reflexionsschicht (16) aufgebracht ist. Die Spritzgießmasse, aus der der Körper (12) hergestellt ist, enthält einen duroplastischen Kunststoff, vorzugsweise ungesättigtes Polyesterharz kombiniert mit Low-Profile Additiven, und einen in der Spritzgießmasse gleichmäßig verteilten elektrisch leitfähigen Zusatzstoff. Als elektrisch leitfähiger Zusatzstoff kann Leitruß mit einem Gewichtsanteil zwischen 1 und 10 %, Graphit mit einem Gewichtsanteil zwischen 1 und 25 % oder Metallpulver oder Kohlenstoffasern mit jeweils einem Gewichtsanteil zwischen 1 und 30 % verwendet werden. Es kann auch eine Mischung aus den vorstehend angegebenen Zusatzstoffen verwendet werden. Der aus der Spritzgießmasse bestehende Körper (12) kann direkt elektrostatisch beschichtet werden.

## Beschreibung

### Stand der Technik

Die Erfindung geht aus von einem Reflektor für Fahrzeugscheinwerfer nach der Gattung des Anspruchs 1.

Ein solcher Reflektor für Fahrzeugscheinwerfer ist durch die EP 0 332 122 A2 bekannt. Der Reflektor besteht dabei aus einem Körper, der durch Spritzgießen einer Masse hergestellt wird, welche aus thermoplastischem Kunststoff mit Zusätzen besteht. Als Zusätze sind Glasfasern und/oder mineralische Füllstoffe vorgesehen. Außerdem enthält die Spritzgießmasse eine bestimmte Menge eines elektrisch leitfähigen Zusatzstoffes, der gleichmäßig in dieser verteilt ist. Dieser elektrisch leitfähige Zusatzstoff dient dazu, den durch das Spritzgießen erhaltenen Körper elektrostatisch beschichten zu können, ohne dazu hierzu weitere Verfahrensschritte notwendig sind. Als elektrisch leitfähige Zusatzstoffe können dabei Kohlenstoffverbindungen oder metallische Fasern dienen, die in einem Gewichtsanteil von etwa 1 bis 25 % der Spritzgießmasse zugegeben werden. Durch die DE 26 45 729 A1 ist es außerdem bekannt, zur Herstellung elektrisch leitfähiger Kunststoffmassen Ruß oder Graphit als Zusätze zu verwenden. Nachteilig bei dem bekannten Reflektor ist, daß dieser wegen der thermoplastischen Kunststoffmasse nur eine geringe Wärmebeständigkeit aufweist und sich während des Betriebs des Fahrzeugscheinwerfers verformen kann, wodurch die optischen Eigenschaften des Reflektors negativ beeinflußt werden. Dies ist bei Fahrzeugscheinwerfern kritisch, da die von diesen zu erzeugende Lichtverteilung gesetzlichen Vorschriften genügen muß.
Durch die DE 33 22 016 A1 ist es weiterhin bekannt, auch Spritzgießmassen mit duroplastischem Kunststoff, insbesondere UP-Harz-Spritzgießmassen (ungesättigte Polyesterharz-Spritzgießmassen wie BMC), gleichmäßig verteilt elektrisch leitfähige Fasern beizumengen, um so spritzgegossene Teile zu erhalten, welche unmittelbar elektrostatisch beschichtet werden können.

### Vorteile der Erfindung

Der erfindungsgemäße Reflektor für Fahrzeugscheinwerfer mit den Merkmalen des Anspruchs 1 hat demgegenüber den Vorteil, daß dieser aufgrund des verwendeten duroplastischen Kunststoffes eine gute Wärmebeständigkeit besitzt und daher im Betrieb des Fahrzeugscheinwerfers die gesetzlichen Vorschriften bezüglich der Lichtverteilung eingehalten werden können. Das Verfahren mit den Merkmalen des Anspruchs 8 hat den Vorteil, daß durch die Wärmebehandlung des spritzgegossenen Körpers vor dem elektrostatischen Aufbringen der Beschichtung eine gute Beständigkeit der Beschichtung auf dem Körper erreicht wird.

Vorteilhafte Ausgestaltungen und Weiterbildungen der Erfindung sind in den abhängigen Ansprüchen angegeben. Durch die im Anspruch 10 angegebene Behandlung des spritzgegossenen Körpers mit UV-Strahlung wird eine gute Haftung der elektrostatisch aufgebrachten Beschichtung erreicht.

### Zeichnung

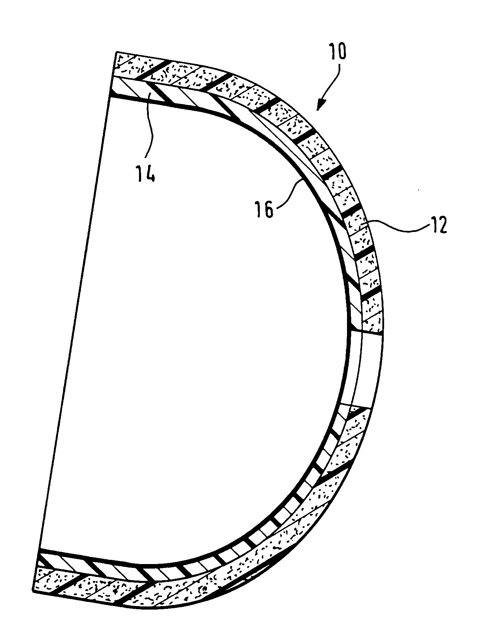

Zwei Ausführungsbeispiele der Erfindung sind in der Zeichnung dargestellt und in der nachfolgenden Beschreibung näher erläutert. Die Figur zeigt einen Reflektor für einen Fahrzeugscheinwerfer in einem Längsschnitt.

### Beschreibung der Ausführungsbeispiele

Ein in der Figur dargestellter Reflektor 10 für einen Fahrzeugscheinwerfer besteht aus einem Körper 12, welcher durch Spritzgießen hergestellt ist und nachfolgend mit einer Beschichtung 14 versehen wird, auf welcher wiederum eine metallische Reflexionsschicht 16 aufgebracht wird.

Die Masse, welche zum Spritzgießen des Körpers 12 verwendet wird, enthält einen duroplastischen Kunststoff, Füll-, Zusatzstoffe sowie elektrisch leitfähige Zusatzstoffe. Als duroplastischer Kunststoff kann UP-Harz (ungesättigtes Polyesterharz) verwendet werden, welches mit einem LP-Additiv (Low-Profile-Additiv), beispielsweise BMC oder SMC gemischt ist. Es können jedoch außer UP-Harz-Massen auch andere polymerisierbare Spritzgießmassen verwendet werden. Die Füll- und Zusatzstoffe werden eingesetzt, um günstige Verarbeitungseigenschaften der Spritzgießmasse und günstige mechanische und chemische Eigenschaften des Körpers zu erreichen. Als Füll- und Zusatzstoffe können Glasfasern und/oder mineralische Zusatzstoffe oder andere Stoffe verwendet werden. Die elektrisch leitfähigen Zusatzstoffe sind erforderlich, um ein elektrostatisches Aufbringen der Beschichtung 14 auf den Körper 12 zu ermöglichen. Die elektrische Leitfähigkeit des Körpers 12 liegt vorzugsweise zwischen 10⁴ bis 10⁸ Ohm cm .

Als elektrisch leitfähige Zusatzstoffe können Leitruß, Graphit, Metallpulver, Metallfasern oder Kohlenstoffasern verwendet werden. Die elektrisch leitfähigen Zusatzstoffe sind in der Spritzgießmasse für den Körper 12 und auch in dem fertigen Körper 12 gleichmäßig verteilt. Die Verarbeitung der Spritzgießmasse erfolgt mit bekannten Spritzgießeinrichtungen. Der elektrisch leitfähige Zusatzstoff kann der Spritzgießmasse in der Schnecke der Spritzgießeinrichtung beigegeben werden, so daß eine gleichmäßige Vermischung stattfindet. Bei der Verwendung von Leitruß wird dieser der Spritzgießmasse in einem Gewichtsanteil von etwa 1 bis 10 % zugegeben. Wird Graphit als elektrisch leitfähiger Zusatzstoff beigemengt, so mit einem Gewichtsanteil von 1 bis 25 %. Metallpulver kann mit einem Gewichtsanteil von 1 bis 30 % zugegeben werden. Kohlenstoffasern können mit einem Gewichtsanteil von 1 bis 30 % zugegeben werden. Es können auch Kombinationen zweier oder mehrerer der vorstehend angegebenen elektrisch leitfähigen Zusatzstoffe verwendet werden. Allgemein wird die Menge der zuzusetzenden elektrisch leitfähigen Zusatzstoffe so gewählt, daß der Körper 12 gut elektrostatisch beschichtet werden kann, das heißt dieser eine ausreichende elektrische Leitfähigkeit aufweist, jedoch die übrigen chemischen und physikalischen Eigenschaften des Körpers 12 nicht negativ beeinflußt werden.

Nachfolgend sind zwei Ausführungsbeispiele für Spritzgießmassen angegeben, bei denen Leitruß als elektrisch leitfähiger Zusatzstoff verwendet wird und die sich in Versuchen als geeignet erwiesen haben. Beim ersten Ausführungsbeispiel weist die Spritzgießmasse dabei die folgende Zusammensetzung auf:

| | |
|---|---|
| UP-Harz + LP-Additiv | ca. 22 % |
| Füllstoff + Glasfaser | ca. 68 % |
| Zusatzstoffe | ca. 3 % |
| Leitruß | ca. 7 % |

Bei einem zweiten Ausführungsbeispiel weist die Spritzgießmasse die folgende Zusammensatzung auf:

| | |
|---|---|
| UP-Harz + LP-Additiv | ca. 22 % |
| Füllstoff + Glasfaser | ca. 72 % |
| Zusatzstoffe | ca. 2,5 % |
| Leitruß | ca. 3,5 % |

Der nach dem Spritzgießen erhaltene Kunststoffkörper 12 wird anschließend einer Wärmebehandlung unterzogen. Die Wärmebehandlung ist hinsichtlich Temperatur und Dauer auf das Material des Kunststoffkörpers abgestimmt. Dieser Wärmebehandlungsvorgang wird auch als Tempern bezeichnet und dient zur Aushärtung des Körpers und zur Ausgasung von bei dessen Aushärtung entstehender Gase, welche ansonsten die nachfolgend aufgebrachte Beschichtung 14 zerstören wurden. Dabei wird der Körper für eine Dauer von etwa 2 bis 9 Stunden einer Temperatur von etwa 140 bis 190 ° Celcius ausgesetzt.

Nach der Wärmebehandlung wird der Körper 12, zumindest dessen nachfolgend elektrostatisch zu beschichtende Fläche, mit UV-Strahlung behandelt. Dabei wird der Körper 12 einer UV-Strahlung mit einer auf dessen Kunststoffmaterial abgestimmten Strahlungsleistung für eine geeignete Dauer ausgesetzt. Als UV-Strahlungsquelle kann beispielsweise eine bekannte UV-Lampe verwendet werden. Durch die UV-Strahlung wird eine chemische Veränderung des Körpers 12 an dessen Oberfläche bewirkt, welche eine gute Haftung der nachfolgend aufzubringenden Beschichtung ermöglicht. Durch die UV-Strahlung werden an der Oberfläche des Körpers OH-Gruppen und/oder COOH-Gruppen gebildet.

Nachfolgend wird der Körper 12 elektrostatisch beschichtet, wozu bekannte Verfahren angewandt werden können. Als Beschichtungsmaterial wird dabei Pulver verwendet, wobei Pulver auf Epoxy-Phenolharz-Basis, auf Epoxy-Acrylat-Basis oder auf Acrylat-Basis besonders geeignet sind. Die Beschichtung 14 dient dazu, in der Oberfläche des Körpers 12 vorhandene Unebenheiten auszugleichen und einen guten Haftgrund für die anschließend auf diese aufzubringende Reflexionsschicht 16 zu bilden. Die Reflexionsschicht 16 kann metallisch sein und beispielsweise durch Bedampfen aufgebracht werden. Auf die Reflexionsschicht 16 kann schließlich noch eine weitere Schutzschicht aufgebracht werden.

## Patentansprüche

1. Reflektor für Fahrzeugscheinwerfer der aus einem Körper (12) besteht, welcher durch Spritzgießen aus einer Spritzgießmasse hergestellt ist, wobei die Spritzgießmasse zumindest aus einem Kunststoff und wenigstens einem gleichmäßig in der Spritzgießmasse verteilten elektrisch leitfähigen Zusatzstoff besteht, und wobei der spritzgegossene Körper (12) nachfolgend mit einer elektrostatisch aufgebrachten Beschichtung (14) versehen wird, auf welche schließlich eine Reflexionsschicht aufgebracht wird, dadurch gekennzeichnet, daß als Kunststoff für die Spritzgießmasse ein duroplastischer Kunststoff verwendet wird.

2. Reflektor nach Anspruch 1, dadurch gekennzeichnet, daß als elektrisch leitfähiger Zusatzstoff Leitruß mit einem Gewichtsanteil zwischen 1 und 10 % bezogen auf die Masse der Spritzgießmasse verwendet wird.

3. Reflektor nach Anspruch 1, dadurch gekennzeichnet, daß als elektrisch leitfähiger Zusatzstoff Graphit mit einem Gewichtsanteil zwischen 1 und 25 % bezogen auf die Masse der Spritzgießmasse verwendet wird.

4. Reflektor nach Anspruch 1, dadurch gekennzeichnet, daß als elektrisch leitfähiger Zusatzstoff Metallpulver mit einem Gewichtsanteil zwischen 1 und 30 % bezogen auf die Gesamtmasse der Spritzgießmasse verwendet wird.

5. Reflektor nach Anspruch 1, dadurch gekennzeichnet, daß als elektrisch leitfähiger Zusatzstoff Kohlenstoffasern mit einem Gewichtsanteil Zwischen 1 und 30 % bezogen auf die Gesamtmasse der Spritzgießmasse verwendet werden.

6. Reflektor nach Anspruch 1, dadurch gekennzeichnet, daß eine Mischung verschiedener elektrisch leitfähiger Zusatzstoffe verwendet wird.

7. Reflektor nach Anspruch 6, dadurch gekennzeichnet, daß die Mischung elektrisch leitfähiger Zusatzstoffe Leitruß und/oder Graphit und/oder Metallpulver und/oder Kohlenstoffasern enthält.

8. Verfahren zur Herstellung eines Reflektors bei dem zunächst durch Spritzgießen aus einer Spritzgießmasse ein Körper (12) hergestellt wird, wobei die Spritzgießmasse zumindest aus einem Kunststoff und wenigstens einem gleichmäßig in der Spritzgießmasse verteilten elektrisch leitfähigen Zusatzstoff besteht, bei dem auf den spritzgegossenen Körper in einem weiteren Verfahrensschritt elektrostatisch eine Beschichtung (14) aufgebracht wird und schließlich auf die Beschichtung (14) eine Reflexionsschicht (16) aufgebracht wird, dadurch gekennzeichnet, daß als Kunststoff für die Spritzgießmasse ein duroplastischer Kunststoff verwendet wird und daß der spritzgegossene Körper (12) vor dem elektrostatischen Aufbringen der Beschichtung (14) einer Wärmebehandlung unterzogen wird.

9. Verfahren nach Anspruch 8, dadurch gekennzeichnet, daß der spritzgegossene Körper (12) nach der Wärmebehandlung zumindest auf der nachfolgend elektrostatisch zu beschichtenden Fläche mit UV-Strahlung bestrahlt wird.
